# EUROPEAN PATENT APPLICATION

(11) **EP 4 836 130 A1**
(43) Date of publication of application: **04.11.2026**
(21) Application number: 26169916.9
(22) Date of filing: 31.03.2026
(51) Int. Cl.: H01M 50/242, H01M 50/209, H01M 50/238

(54) **BATTERY MODULE AND BATTERY PACK INCLUDING THE SAME**

(30) Priority: 30.04.2025 KR 20250057695
(71) Applicant: SAMSUNG SDI CO., LTD., Yongin-si, Gyeonggi-do 17084 (KR)
(72) Inventor: MOON, Youngsik, 17084 Yongin-si, Gyeonggi-do (KR); CHOI, Seonung, 17084 Yongin-si, Gyeonggi-do (KR); LEE, Gihun, 17084 Yongin-si, Gyeonggi-do, (KR)
(74) Representative: Gulde & Partner

(57) **Abstract**

A battery module includes a battery group in which battery cells arranged in a direction and an end plate including a first body arranged on a side of the battery group in the direction and arranged to face the battery group, a second body spaced apart from the first body, and a deformable portion between the first body and the second body so as to be compressively deformable. At least one of the first body or the second body includes a connecting projection protruding toward the deformable portion and is engageable with the deformable portion.

## Description

### BACKGROUND

### 1. Field

The disclosure relates to a battery module and a battery pack including the same.

### 2. Description of the Related Art

Secondary batteries are batteries that may be charged and discharged, unlike primary batteries that may not be recharged.

Low-capacity secondary batteries are used in small, portable electronic devices such as smartphones, feature phones, laptop computers, digital cameras, and camcorders, and high-capacity secondary batteries are widely used as motor-driving power sources, power-storing batteries, etc., for hybrid vehicles, electric vehicles, etc.

Depending on the operations of a secondary battery, a battery cell may repeatedly expand and contract, and various methods are being sought to improve the durability of a battery module including such a secondary battery.

The above-described information disclosed in the technology section that serves as the background of the disclosure is only for improving the understanding of the background of the disclosure, and thus may include information that does not constitute related art.

### SUMMARY

The disclosure provides a battery module and a battery pack including the same in which expansion of a battery cell is absorbed using a stacked structure of an end plate in which a first body, a second body, and a deformable portion are arranged in a direction.

However, technical problems to be solved by the disclosure are not limited to the problem, and other problems not mentioned may be clearly understood by those of ordinary skill in the art from the description of the disclosure described below.

According to an embodiment of the disclosure, a battery module includes a battery group in which a plurality of battery cells are arranged in a direction and an end plate including a first body arranged on a side of the battery group in the direction and arranged to face the battery group, a second body spaced apart from the first body, and a deformable portion between the first body and the second body, preferably so as to be compressively deformable (e.g., the deformable portion being compressively deformable). At least one of the first body or the second body includes a connecting projection protruding toward the deformable portion and is engageable with the deformable portion.

In some embodiments, the connecting projection may be relatively closer to an edge of the first body or the second body than a center of the first body or the second body. This enhances the compensation of deformation, e.g., due to swelling.

In some embodiments, the connecting projection may be on at least one of a first surface of the first body facing the second body or a second surface of the second body facing the first body. This facilitates assembly.

In some embodiments, a stiffness of the deformable portion may increase from a center of the deformable portion toward an edge of the deformable portion. This enhances the compensation of deformation, e.g., due to swelling.

In some embodiments, the deformable portion may include an absorbing member that is in surface-contact with the first body and/or the second body; and preferably a support member that is connected to an outer side of the absorbing member and/or has a higher stiffness than the absorbing member. This enhances stability while compensating the deformation.

In some embodiments, an electrode assembly accommodated inside the battery cell may be in an inner side of a periphery of the absorbing member when viewed from the direction. This facilitates assembly.

In some embodiments, the support member may be adjacent to a battery terminal of a battery cell. This enhances stability while compensating the deformation.

In some embodiments, the connecting projection may have a shape with a width increasing outwardly. This enhances stability of the engagement when compensating the deformation.

In some embodiments, the connecting projection may extend in a height direction of a battery cell. This enhances stability of the engagement when compensating the deformation.

In some embodiments, the deformable portion may include a connecting groove having a preset depth that is configured to allow the connecting projection to be inserted therein. This enhances stability of the engagement when compensating the deformation.

According to an embodiment of the disclosure, a battery pack includes battery modules and a pack housing in which the battery modules are accommodated. Each of the battery modules includes a battery group in which battery cells are arranged in a direction and an end plate including a first body on a side of the battery group in the direction and arranged to face the battery group, a second body spaced apart from the first body, and a deformable portion between the first body and the second body so as to be compressively deformable. At least one of the first body or the second body includes a connecting projection protruding toward the deformable portion so as to be engageable with the deformable portion.

In some embodiments, the connecting projection may be relatively closer to an edge of the first body or the second body than a center of the first body or the second body.

In some embodiments, the connecting projection may be on at least one of a first surface of the first body facing the second body or a second surface of the second body facing the first body.

In some embodiments, a stiffness of the deformable portion may increase from a center of the deformable portion toward an edge of the deformable portion.

In some embodiments, the deformable portion may include an absorbing member that is in surface-contact with the first body or the second body and a support member that is connected to an outer side of the absorbing member and has a higher stiffness than the absorbing member.

In some embodiments, an electrode assembly accommodated inside the battery cell may be in an inner side of a periphery of the absorbing member when viewed from the direction.

In some embodiments, the support member may be adjacent to a battery terminal of a battery cell.

In some embodiments, the connecting projection may have a shape with a width increasing outwardly.

In some embodiments, the connecting projection may extend in a height direction of a battery cell.

In some embodiments, the deformable portion may include a connecting groove having a preset depth that is configured to allow the connecting projection to be inserted therein.

### BRIEF DESCRIPTION OF THE DRAWINGS

The following drawings attached to this specification illustrate preferred embodiments of the disclosure, and serve to further understand the technical idea of the disclosure together with the detailed description of the disclosure described later, such that the disclosure should not be construed as being limited to the matters shown in such drawings:
FIG. 1 schematically shows a battery pack including a battery module according to an embodiment of the present disclosure;
FIG. 2 shows a battery module according to an embodiment of the present disclosure;
FIG. 3 is an exploded perspective view of the battery module of FIG. 2;
FIG. 4 is an exploded perspective view of an embodiment of an end plate of FIG. 3;
FIG. 5 is a plan view of FIG. 4;
FIG. 6 is a view showing in detail some components of FIG. 4;
FIG. 7 is an exploded perspective view of an end plate according to another embodiment of the disclosure;
FIG. 8 is a plan view of FIG. 7; and
FIG. 9 is a view showing in detail some components of FIG. 7.

### DETAILED DESCRIPTION

Hereinafter, embodiments of the disclosure will be described in detail with reference to the accompanying drawings. The terms and words used in the present specification and claims described above should not be construed as being limited to ordinary or dictionary meanings, and should be interpreted as meanings and concepts consistent with the technical idea of the disclosure based on the principle that the present inventors may appropriately define the concept of the terms to describe their invention in the best way. Therefore, the embodiments described in this specification and the configurations illustrated in the drawings are only some of the most preferred embodiments of the disclosure and do not represent all of the technical ideas of the disclosure, and it should be understood that there may be various equivalents and modified examples that may replace them at the time of filing this application.

As used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups.

To help understanding of the disclosure, the accompanying drawings are not shown according to the actual scale, but the dimensions of some components may be exaggerated. The same reference numeral may be given to the same component in different embodiments.

The statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. In case that a uniform parameter is uniform in a selected area, it may mean that it is uniform from an average point of view.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

In case that a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

In case that a component is described as being "connected", "coupled", or "connected" to another component, it should be understood that the components are directly connected or connectable to each other, but another component may be "interposed" between the components, or the components may be "connected", "coupled", or "connected" to each other through another component. In case that a portion is electrically coupled to another portion, this may include not only a case where they are directly connected to each other, but also a case where they are connected with another element therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

The terminology used herein is for the purpose of describing embodiments of the disclosure and is not intended to be limiting of the disclosure.

Hereinbelow, an x-axis, a y-axis, and a z-axis are not limited to three axes on an orthogonal coordinate system, and may be interpreted in a broad sense including them. For example, the x-axis, the y-axis, and the z-axis may be orthogonal to each other, but may also refer to different directions that are not orthogonal to each other.

For convenience of a description, an x-axis may be defined as a longitudinal direction of a battery module, a y-axis may be defined as a width direction of the battery module, and a z-axis may be defined as a height direction of the battery module. The x-axis may be substantially parallel to a direction in which a plurality of battery cells are arranged.

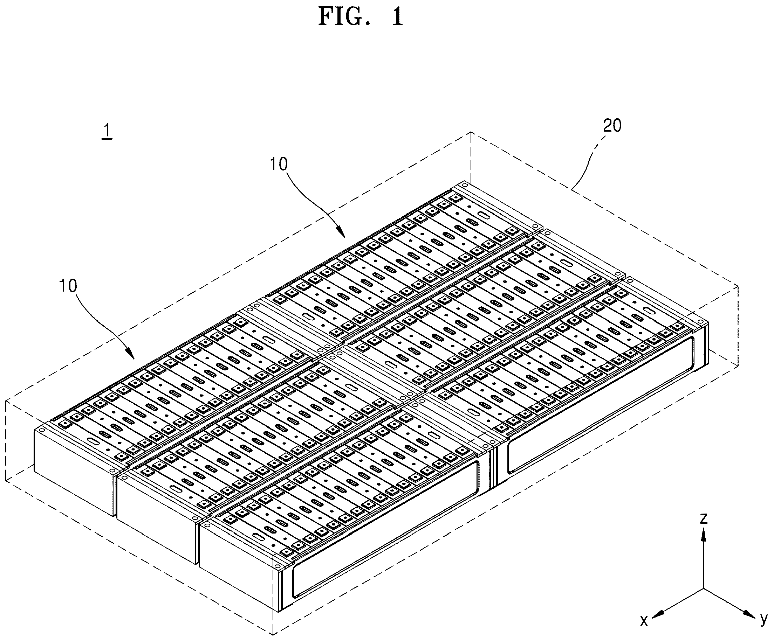

FIG. 1 schematically shows a battery pack including a battery module according to an embodiment of the present disclosure.

Referring to FIG. 1, a battery pack 1 may include a battery module 10 and a pack housing 20.

The battery pack 1 may include a plurality of battery modules 10 therein. The battery pack 1 may store electrical energy therein.

The battery pack 1 may be electrically connected to an external device requiring power. The battery pack 1 may supply electrical energy to the electrically connected external device. The battery pack 1 may function as a power source for the external device.

The plurality of battery modules 10 may be electrically connected to each other by a module bus bar or the like. In one or more embodiments, the plurality of battery modules 10 may be connected in series and/or in parallel with each other. The external device connected to the battery pack 1 may receive electrical energy having an output adjusted by connection between the plurality of battery modules 10.

Although it is shown in FIG. 1 that the battery pack 1 includes six battery modules 10, the present disclosure is not limited thereto. The number of battery modules 10 included in the battery pack 1 and a connection method for the plurality of battery modules 10 may be selected as desired.

Referring to FIG. 1, the pack housing 20 may provide a space in which the battery module 10 is accommodated. The pack housing 20 may spatially separate the battery module 10 from the outside, thereby minimizing the influence of the external environment on the battery module 10.

The pack housing 20 may support the battery module 10. For example, the pack housing 20 may have an accommodation space having a shape corresponding to an appearance of the battery module 10.

The pack housing 20 may electrically connect the battery module 10 to an external device. For example, the pack housing 20 may electrically connect the battery module 10 to the external device using a connection terminal connected to the external device.

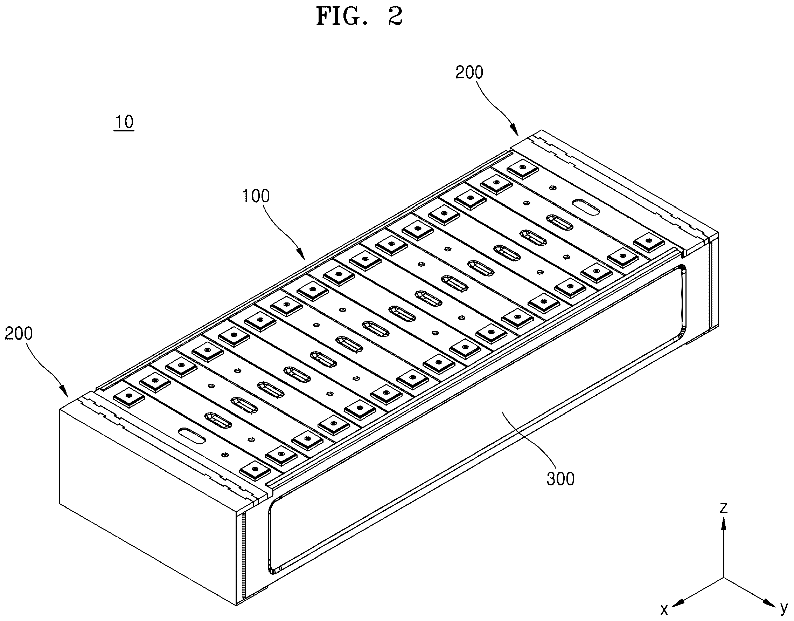

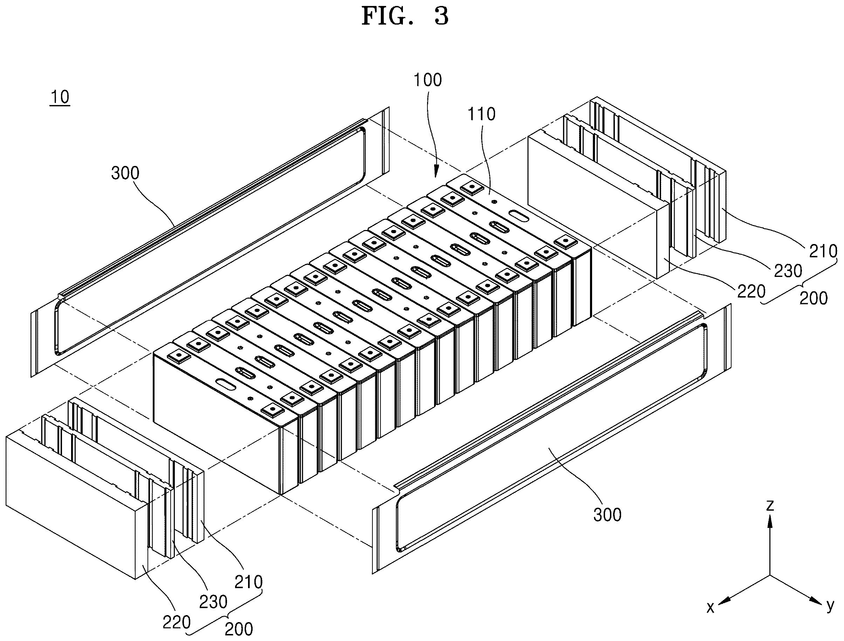

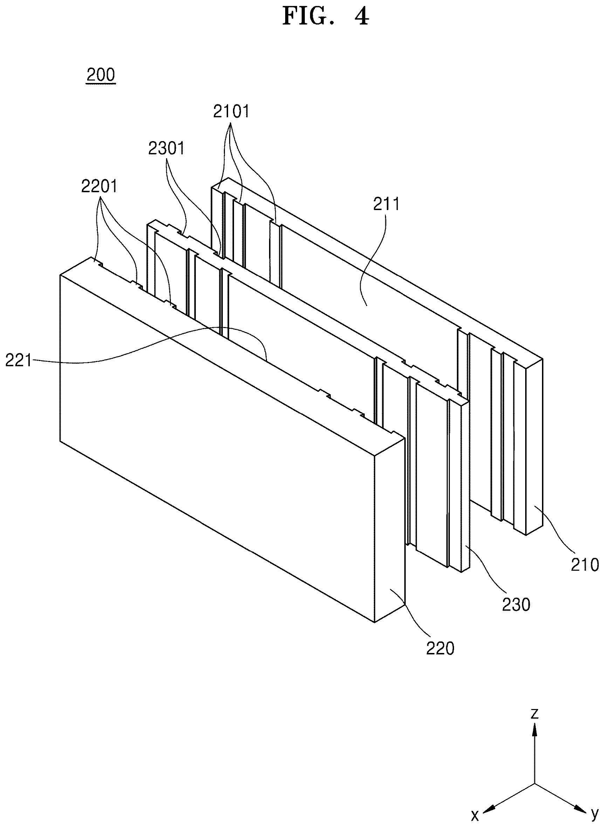

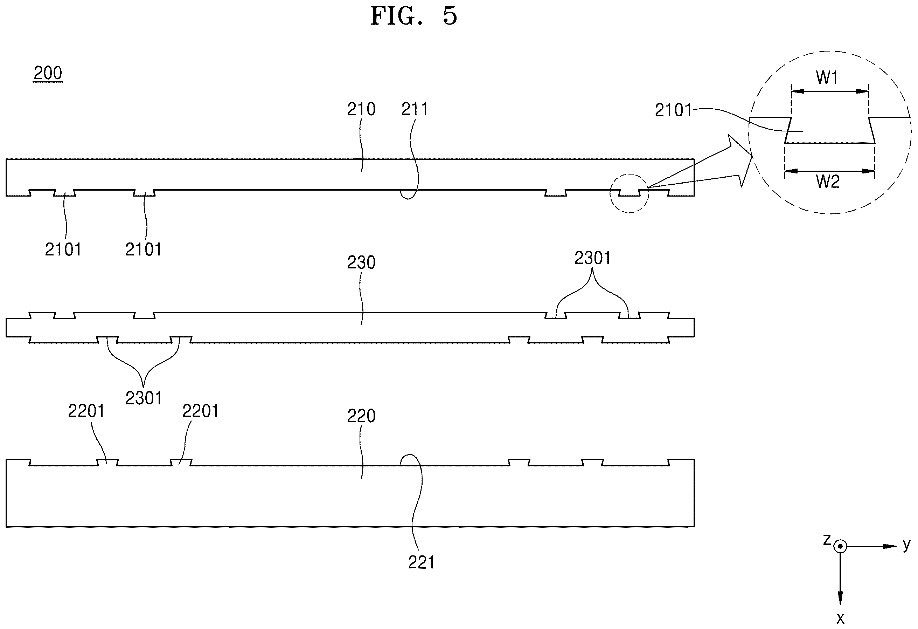

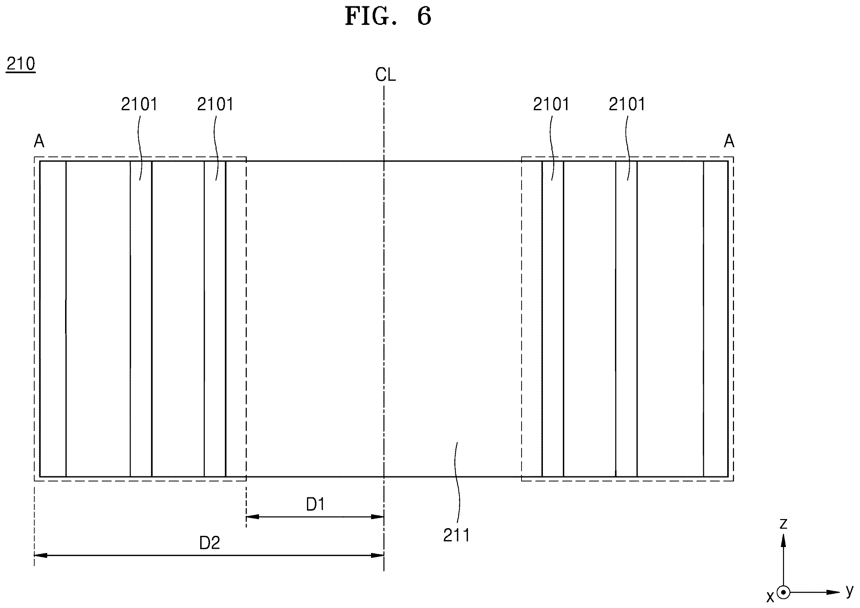

FIG. 2 shows a battery module according to an embodiment of the present disclosure. FIG. 3 is an exploded perspective view of the battery module of FIG. 2. FIG. 4 is an exploded perspective view of an end plate of FIG. 3. FIG. 5 is a plan view of FIG. 4. FIG. 6 is a view showing in detail some components of FIG. 4.

Referring to FIGS. 2 and 3, the battery module 10 may include a battery group 100, an end plate 200, and a side plate 300.

Referring to FIGS. 2 and 3, the battery group 100 may include a plurality of battery cells 110. The plurality of battery cells 110 may be arranged in a length direction of the battery module 10 to maximize the energy density of the battery module 10.

The plurality of battery cells 110 may be electrically connected to each other. The plurality of battery cells 110 may be connected in series and/or in parallel with each other such that the output of electrical energy supplied to the outside may be controlled.

The battery cell 110 may store electrical energy by including a positive electrode, a negative electrode, etc., therein. The battery cell 110 may receive electrical energy from the outside and store the electrical energy therein, or transmit the stored electrical energy to another component.

Although it is shown in FIGS. 1 to 3 that the battery cell 110 has a cuboid appearance, the appearance of the battery cell 110 is not limited thereto. For example, the battery cell 110 may have a cylindrical or pouch shape. However, for convenience of a description, the following description will be made mainly of an example in which the battery cell 110 has a cuboid appearance.

Referring to FIGS. 2 to 5, the end plate 200 may be arranged on a side of the battery group 100. In some embodiments, the end plate 200 may be arranged on a side of the battery group 100 in the direction in which the battery cells 110 are stacked.

The end plate 200 may be in contact with the outermost battery cell 110 among a plurality of battery cells 110 arranged in one direction. Thus, the end plate 200 may support the battery group 100 in the direction in which the battery cells 110 are stacked.

Referring to FIGS. 2 and 3, the end plate 200 may be provided as a pair of end plates 200. The pair of end plates 200 may be arranged on opposite sides (or ends) of the battery group 100 in the direction in which the battery cells 110 are stacked (e.g., the X-axis direction).

The pair of end plates 200 may be connected to each other by the side plate 300. The pair of end plates 200 may be connected to each other to support the battery group 100 in opposite directions. Thus, the battery group 100 may be supported more firmly than if the end plates 200 and the side plate 300 were not provided.

In an embodiment, the end plate 200 may include a first body 210, a second body 220, and a deformable portion 230.

Referring to FIG. 3, the first body 210 may be arranged to face the battery group 100. In some embodiments, the first body 210 may be in surface-contact with the battery cell 110 positioned at the outermost end of the battery group 100 (e.g., the outmost battery cell 100 in the X-axis direction). The first body 210 may support the battery cell 110, positioned at the outermost end, in a longitudinal direction of the battery module 10.

The first body 210 may be arranged between the battery group 100 and the deformable portion 230. The first body 210 may be pushed in the longitudinal direction of the battery module 10 to pressurize the deformable portion 230 in the event that the battery cell 110 expands. That is, the first body 210 may transmit a swelling force generated by the expansion of the battery cell 110 to the deformable portion 230.

Referring to FIGS. 2 to 4, the first body 210 may have a first surface 211 facing the second body 220. That is, the first surface 211 may be arranged to face the deformable portion 230.

The first body 210 may contact and support the deformable portion 230 through the first surface 211. That is, the first body 210 may come into surface-contact with the deformable portion 230 through the first surface 211 such that the connection between the first body 210 and the deformable portion 230 may be strengthened.

Referring to FIGS. 4 to 6, the first body 210 may have a connecting projection. In some embodiments, a first connecting projection 2101 may be formed in the first body 210 to protrude toward the deformable portion 230. The first connection projection 2101 is configured to connect the first body 210 to the deformable portion 230.

The first connecting projection 2101 may contact the deformable portion 230. The first connecting projection 2101 may maximize (or at least increase) the area of contact between the first body 210 and the deformable portion 230. That is, the first connecting projection 2101 may contact and support the deformable portion 230. Thus, the connection between the first body 210 and the deformable portion 230 may be strengthened.

In an embodiment, the first connecting projection 2101 may be inserted into a connecting groove 2301 in the deformable portion 230. As the first connecting projection 2101 comes into contact with an inner peripheral surface of the connecting groove 2301, the area where the first body 210 and the deformable portion 230 come into contact with each other may be maximized (or at least increased). Thus, the first connecting projection 2101 may firmly support the position of the deformable portion 230 with respect to the first body 210.

The first connecting projection 2101 may be on the first surface 211. The first connecting projection 2101 may be on the first surface 211 facing the deformable portion 230 and may be connected to the deformable portion 230.

In one or more embodiments, a height by which the first connecting projection 2101 protrudes to be connected to the deformable portion 230 may be minimized (or at least reduced). Thus, the structure of the end plate 200 may become compact and structural stability may be improved.

Hereinafter, the 'width of the connecting projection' may be defined as the length of the connecting projection in the width direction of the battery module 10. In other words, the 'width of the connecting projection' may be defined as the length of the connecting projection in the y-axis direction.

Referring to FIG. 5, the first connecting projection 2101 may have a shape with a width increasing outwardly (e.g., a shape tapering inwardly). In other words, the first connecting projection 2101 may have a shape in which the width increases in a direction (e.g., the X-axis direction) to protrude from the first body 210.

For example, the first connecting projection 2101 may have a first width W1 at a point where the first connecting projection 2101 is connected to the first body 210, and the first connecting projection 2101 may have a second width W2 greater than the first width W1 at an end spaced from the first body 210. In one or more embodiments, the first connecting projection 2101 may have a dovetail shape. Accordingly, the first connecting projection 2101 may be inserted into an inner side of the connecting groove 2301 formed in the deformable portion 230 to support the deformable portion 230 in the longitudinal direction of the battery module 10. Thus, the deformable portion 230 may be hooked to the first body 210 such that a relative position of the deformable portion 230 with respect to the first body 210 may be fixed.

In an embodiment, the first connecting projection 2101 may extend in a height direction (e.g., the Z-axis direction) of the battery module 10. For example, the first connecting projection 2101 may be connected to a surface of the first body 210 in the height direction and another surface opposite thereto.

As the first connecting projection 2101 is formed to extend in the height direction of the battery module 10, an area of the first connecting projection 2101 facing the width direction of the battery module 10 may be maximized (or at least increased). In other words, an area in which the first connecting projection 2101 supports the deformable portion 230 in the width direction of the battery module 10 may be maximized (or at least increased). Thus, the relative position of the deformable portion 230 with respect to the first body 210 may be firmly supported.

Hereinafter, an 'edge' may be defined as an outer boundary when a particular component is observed in the longitudinal direction of the battery module 10.

Referring to FIGS. 4 to 6, the first connecting projection 2101 may be positioned relatively closer to an edge of the first surface 211 than a center of the first surface 211. As the first connecting projection 2101 is positioned closer (e.g., proximate) to the edge, a side of the deformable portion 230 that is positioned relatively closer to the center of the first surface 211 may have a greater thickness than that of the edge.

Accordingly, in the event that a swelling phenomenon occurs in the battery cell 110, the thickness of the deformable portion 230 that overlaps a portion where expansion of the battery cell 110 mainly occurs may be relatively large. Thus, in the event that the swelling phenomenon occurs, the expansion of the battery cell 110 by the deformable portion 230 may be efficiently absorbed by the relatively thicker portion of the deformable portion 230.

Hereinafter, a 'center line' may be defined as a virtual line that passes through the center point of the width of the first body 210 or the second body 220 and extends in the height direction of the battery module 10. In other words, the 'center line' may be defined as an imaginary line that passes through the center point of the width of the first body 210 or the second body 220 and is parallel (or substantially parallel) to a z-axis.

Referring to FIG. 6, the first connecting projection 2101 may be arranged at a position spaced apart by a preset distance from a center line CL. In some embodiments, the first connecting projection 2101 may be positioned relatively closer to a width-wise edge of the first body 210 than the center line CL. Thus, in the event that the swelling phenomenon occurs, the amount of expansion of the battery cell 110 absorbed by the deformable portion 230 may be maximized (or at least increased), and the structural stability of the battery module 10 may be improved.

Referring to FIGS. 4 to 6, the first connecting projection 2101 may be provided as a plurality of first connecting projections 2101 spaced apart from each other. The first body 210 may include the plurality of first connecting projections 2101 to maximize (or at least increase) an area in contact with the deformable portion 230. Thus, the relative position of the deformable portion 230 with respect to the first body 210 may be supported more firmly.

Referring to FIG. 6, the first surface 211 may have a connection region A where the first connecting projections 2101 are formed. That is, the plurality of first connecting projections 2101 may be arranged inside the connection region A on the first surface 211. In one or more embodiments, the connection region A may be a first connection region A1 and a second connection region A2.

The connection region A may be a region relatively closer to the edge than the center of the first surface 211. Because the plurality of first connecting projections 2101 are arranged at a position close to the edge, a side of the deformable portion 230 that is arranged relatively closer to the center of the first body 210 may have a relatively thicker thickness than that of the edge.

Referring to FIG. 6, the connection region A may cover a region between a point spaced apart from the center line CL by a preset distance on the first surface 211 and an end (or edge) of the first surface 211.

For example, a distance between a side of the connection region A spaced from the center line CL and the center line CL may be a first distance D1, and a distance between a side (or edge) of the connection region A furthest away from the center line CL and the center line CL may be a second distance D2.

The second distance D2 may substantially correspond to a distance between the center line CL and the edge of the first surface 211 positioned in the width direction of the battery module 10. The first distance D1 may have a value greater than a half of the second distance D2.

Accordingly, in the event that a swelling phenomenon occurs in the battery cell 110, the thickness of the deformable portion 230 that overlaps the portion where the expansion of the battery cell 110 mainly occurs (e.g., around the centerline CL) may be maximized or at least increased. Thus, in the event that the swelling phenomenon occurs, the expansion of the battery cell 110 may be efficiently absorbed by the deformable portion 230.

Referring to FIGS. 4 and 5, the second body 220 may be spaced apart from the first body 210. The second body 220 may be spaced apart from the first body 210 by a preset distance to provide a space in which the deformable portion 230 may be arranged between the first body 210 and the second body 220.

In other words, the second body 220 may be arranged apart from the first body 210 with the deformable portion 230 therebetween (e.g., the first body 210 and the second body 220 may be on opposite sides of the deformable portion 230). The second body 220 may pressurize the deformable portion 230 in a direction opposite to the first body 210 in the event that the battery cell 110 expands and thus the first body 210 pressurizes the deformable portion 230. The deformable portion 230 may be deformed when pressurized and thus absorb the expansion of the battery cell 110.

The second body 220 may have a second surface 221 facing the first body 210. The second body 220 may contact the deformable portion 230 through the second surface 221. The first body 210 and the second body 220 may press the deformable portion 230 in a direction facing each other to induce compressive deformation of the deformable portion 230.

The first surface 211 and the second surface 221 may be arranged to face each other. The deformable portion 230 arranged between the first body 210 and the second body 220 may have a constant thickness in the width direction of the battery module 10. Thus, the deformable portion 230 may uniformly absorb the expansion of the battery cell 110 due to swelling in the width direction of the battery module 10.

Referring to FIGS. 4 and 5, the second body 220 may have a connecting projection. In some embodiments, a second connecting projection 2201 may be in the second body 220 and may protrude toward the deformable portion 230. The second connection projection 2201 may be configured to engage the deformable portion 230.

The structure of the second body 220 having the second connecting projection 2201 may correspond to the structure of the first body 210 described above. Therefore, hereinbelow, redundant parts of the structure of the first body 210 will not be described or will be briefly described, and an explanation will focus on differences therebetween.

The second connecting projection 2201 may be formed on the second surface 221. The second connecting projection 2201 may be formed on the second surface 221 facing the deformable portion 230 and may be connected to the deformable portion 230. The second connecting projection 2201 may be connected to the deformable portion 230 and protrude from the second surface 221, thereby making the structure of the end plate 200 compact and improving the structural stability of the end plate 200.

The second connecting projection 2201 may have a shape in which the width increases outwardly and may be formed to extend in the height direction of the battery module 10. That is, the second connecting projection 2201 may be hooked to the deformable portion 230 and maximize (or at least increase) the area of the second body 220 in contact with the deformable portion 230, thereby firmly supporting the position of the deformable portion 230 with respect to the second body 220.

The second connecting projection 2201 may be positioned relatively closer to an edge of the second surface 221 than a center of the second surface 221. For example, the second connecting projection 2201 may be spaced apart from the center line CL of the second surface 221 by a preset distance. Thus, the thickness of the deformable portion 230 that overlaps the portion where expansion of the battery cell 110 mainly occurs (e.g., around the centerline) may be maximized (or at least increased), and the expansion of the battery cell 110 may be efficiently absorbed by the deformable portion 230.

In an embodiment, the second connecting projection 2201 may be provided as a plurality of second connecting projections 2201 and may be arranged on the connection region A of the second surface 221.

The connection region A on the second surface 221 may be a region relatively closer to the edge than to the center of the second surface 221. For example, the connection region A may cover a region between a line spaced by a preset distance from the center line CL and the edge of the second surface 221 spaced in the width direction. Thus, the expansion of the battery cell 110 due to swelling may be efficiently absorbed by the deformable portion 230.

Although it is shown in FIGS. 2 to 5 that connecting projections 2101 and 2201 are formed on each of the first body 210 and the second body 220, respectively, the structure of the end plate 200 is not limited thereto.

For example, the connecting projections may be formed on any one of the first body 210 and/or the second body 220. As the connecting projections are formed on any one of the first body 210 and/or the second body 220, a space may be provided in which the deformable portion 230 may be arranged between the first body 210 and the second body 220. Thus, the amount of expansion of the battery cell 110 absorbed by the end plate 200 may increase.

Referring to FIGS. 3 to 5, the deformable portion 230 may be arranged (e.g., sandwiched) between the first body 210 and the second body 220. The first body 210, the second body 220, and the deformable portion 230 may be arranged in the longitudinal direction (e.g., the X-axis direction) of the battery module 10. Thus, the first body 210 and the second body 220 may pressurize the deformable portion 230 in the longitudinal direction of the battery module 10 in the event that the battery cell 110 expands.

The deformable portion 230 may have an area corresponding to the first surface 211 and the second surface 221. In some embodiments, the deformable portion 230 may be in surface-contact with the first surface 211 and the second surface 221 of the first body 210 and the second body 220, respectively. That is, the deformable portion 230 may contact and support each portion of the first surface 211 and the second surface 221. Thus, the deformable portion 230 may minimize (or at least reduce) deformation by applying different forces to each portion of the first body 210 and the second body 220.

The deformable portion 230 may be compressively deformed. In some embodiments, a stiffness of the deformable portion 230 may be less than that of the first body 210 or the second body 220, such that a strain of the deformable portion 230 due to a pressure applied from the outside may be greater than that of either the first body 210 or the second body 220.

The deformable portion 230 may be compressively deformed in response to being pressurized by the first body 210 and the second body 220 due to expansion of the battery cell 110. The deformable portion 230 may be compressed in the event that the battery cell 110 expands to enable partial movement of the first body 210, thereby absorbing expansion of the battery cell 110. Thus, the structural stability of the battery module 10 may be secured.

Referring to FIGS. 4 and 5, the connecting groove 2301, into which the connecting projections 2101 or 2201 may be inserted, may be in the deformable portion 230. The deformable portion 230 may allow the connecting projection 2101 or 2201 to be inserted into the connecting groove 2301, thus being connected to at least one of the first body 210 or the second body 220.

As described above, the connecting projection 2101 or 2201 may be formed on at least one of the first body 210 or the second body 220, but for convenience of a description, the following description will focus on an embodiment in which the first body 210 includes the first connecting projection 2101 and the second body 220 includes the second connecting projection 2201.

The connecting grooves 2301 may be formed at positions corresponding to the first connecting projection 2101 and the second connecting projection 2201 on the first surface 211 and the second surface 221, respectively. The first connecting projection 2101 and the second connecting projection 2201 may be inserted into the connecting grooves 2301, such that the first body 210, the second body 220, and the deformable portion 230 may be aligned and coupled together. Thus, the structural stability of the end plate 200 may be improved.

The connecting grooves 2301 may have shapes corresponding to the first connecting projection 2101 and the second connecting projection 2201 (e.g., the connecting grooves 2301 may have a dovetail shape). The first connecting projection 2101 and the second connecting projection 2201 may be inserted into the connecting grooves 2301 and may contact inner peripheral surfaces of the connecting grooves 2301. The first connecting projection 2101 and the second connecting projection 2201 may be configured to firmly maintain a connection relationship among the first body 210, the second body 220, and the deformable portion 230 by being in surface-contact with the deformable portion 230.

In an embodiment, the deformable portion 230 may have a stiffness that increases from the center toward the edge. In other words, the deformable portion 230 may have a relatively low stiffness in the center such that deformation may readily occur, and may have a relatively higher stiffness at the edge such that deformation may be limited. Thus, the deformable portion 230 may absorb expansion in the center where expansion of the battery cell 110 mainly occurs, and firmly support the edge, thereby improving the structural stability of the battery cell 110.

Referring to FIGS. 2 and 3, the side plate 300 may be arranged on a side of the battery group 100. In some embodiments, the side plate 300 may be arranged on a side of the battery group 100 in a direction (e.g., the Y-axis direction) substantially perpendicular to the direction (e.g., the X-axis direction) in which the battery cell 110 is arranged.

The side plate 300 may be arranged on a side of the battery group 100 to support the battery cells 110. The side plate 300 may contact and support the battery cells 110, thereby preventing the battery cells 110 from being displaced.

The side plate 300 may connect a pair of end plates 200 to each other. In one or more embodiments, opposite ends of the side plate 300 may be connected to the pair of end plates 200 and the side plate 300 may support the relative positions of the pair of end plates 200.

That is, the side plate 300 may support the pair of end plates 200 and fix the position thereof even in the event that the battery cell 110 expands. Thus, the side plate 300 may provide a restraining force for the end plates 200 to support the battery group 100.

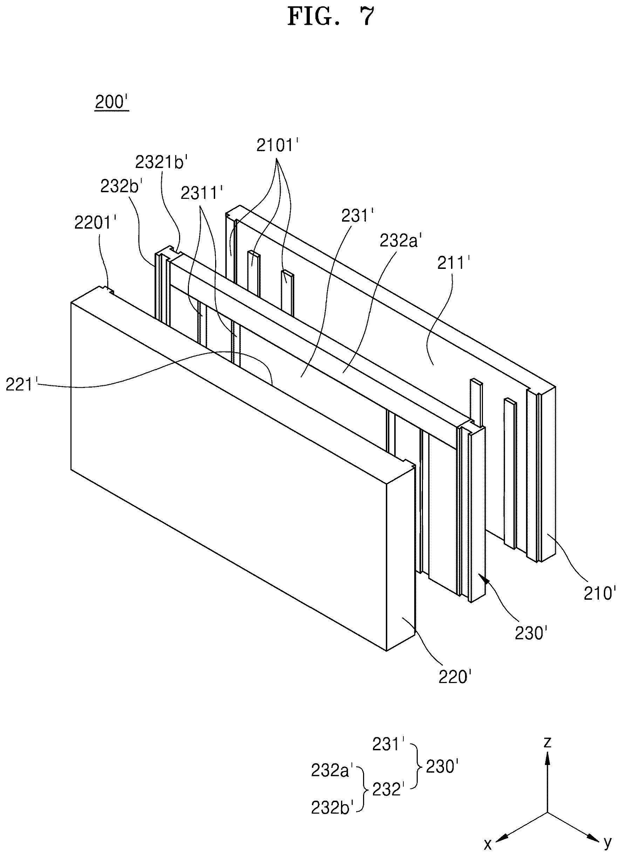

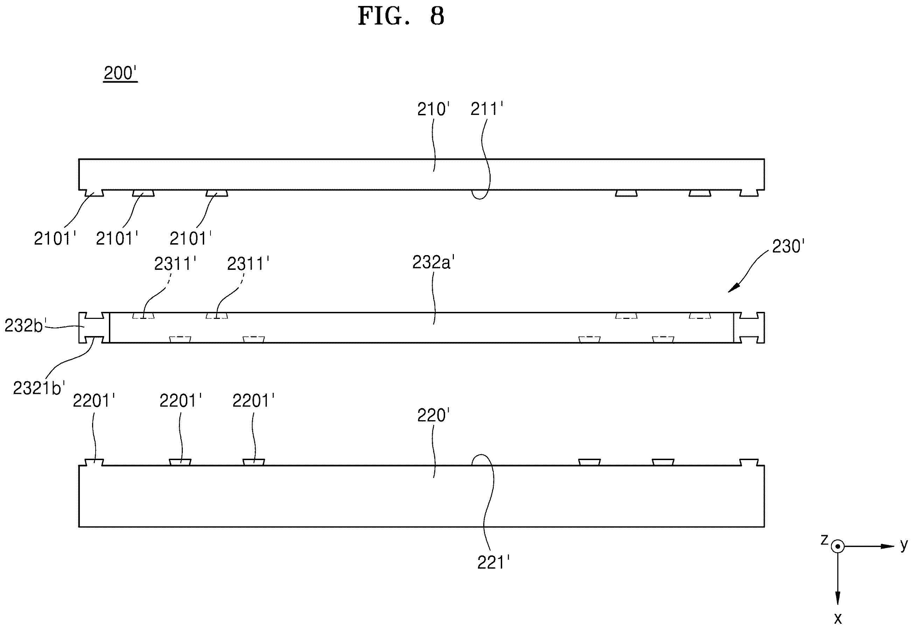

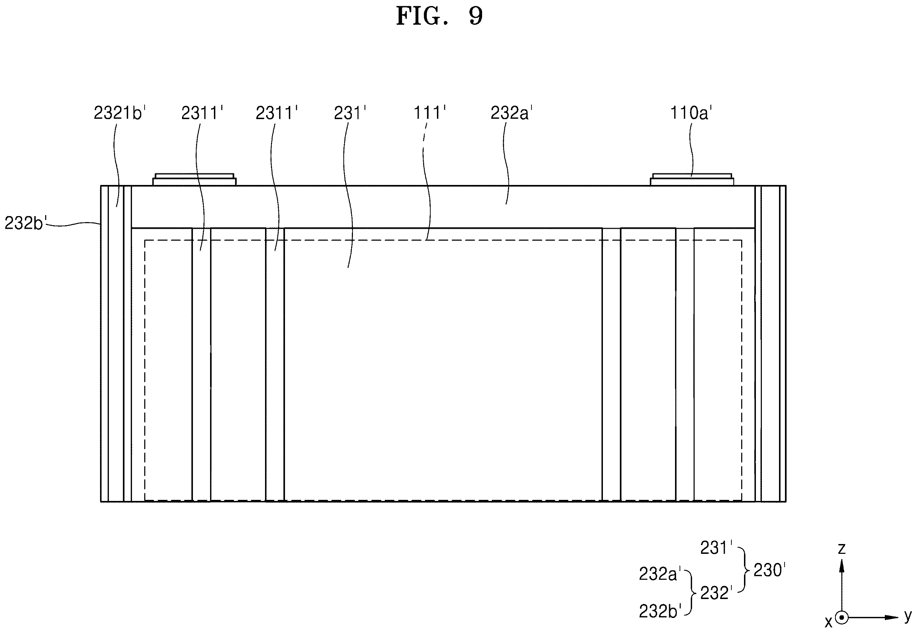

FIG. 7 is an exploded perspective view of an end plate according to another embodiment of the present disclosure. FIG. 8 is a plan view of FIG. 7. FIG. 9 is a view showing in detail some components of FIG. 7.

An end plate 200' according to another embodiment of the disclosure may have some differences in configuration and shape in comparison to the end plate 200 according to the current embodiment of the disclosure, such redundant parts will be briefly described or omitted, and the differences will be mainly described.

Referring to FIGS. 7 and 8, the end plate 200' according to another embodiment of the disclosure may include a first body 210', a second body 220', and a deformable portion 230'.

The first body 210' may be arranged to face a battery group 100' and may support the battery group 100' in a longitudinal direction (e.g., the X-axis direction) of a battery module 10'. The first body 210' may be arranged between the battery group 100' and the deformable portion 230' to transmit a force, applied from the battery group 100' due to the expansion of a battery cell 110', to the deformable portion 230'.

The first body 210' may be in surface-contact with the deformable portion 230' to contact and support the deformable portion 230'. The first body 210' may strengthen coupling with the deformable portion 230' by contacting and supporting the deformable portion 230' with a first surface 211', thereby improving the structural stability of the end plate 200'.

Referring to FIGS. 7 and 8, the first body 210' may have a connecting projection formed to protrude toward the deformable portion 230'. In some embodiments, the first body 210' may have a first connecting projection 2101' that is engageable with the deformable portion 230', thereby maximizing (or at least increasing) an area in contact with the deformable portion 230'. Thus, coupling between the first body 210' and the deformable portion 230' may be firmly maintained.

The first connecting projection 2101' in the first body 210' may be in a position corresponding to a connecting groove 2301' of the deformable portion 230'. The first connecting projection 2101' may be inserted into the connecting groove 2301' to maximize (or at least increase) a contact area between the first body 210' and the deformable portion 230' and to support the relative positions of the first body 210' and the deformable portion 230'.

The first connecting projection 2101' may be arranged closer to an edge of the first body 210' than a center of the first body 210'. Thus, as described above, the thickness of the deformable portion 230' in the center portion is increased, thereby making the deformable portion 230' capable of absorbing the expansion of the battery cell 110'.

Referring to FIGS. 7 and 8, the second body 220' may be spaced apart from the first body 210' with the deformable portion 230' therebetween (e.g., the deformable portion 230' may be sandwiched between the first body 210' and the second body 220'). The second body 220' may compressively deform the deformable portion 230' by pressurizing the deformable portion 230' together with the first body 210'. The second body 220' may pressurize the battery cell 110' in the opposite direction to the first body 210' in response to the battery cell 110' expanding, thereby allowing the swelling of the battery cell 110' to be absorbed by the deformable portion 230'.

The second body 220' may include a second connecting projection 2201'. For example, the second connecting projection 2201' may be on a second surface 221' of the second body 220' facing the deformable portion 230', thereby maximizing (or at least increasing) the contact area between the second body 220' and the deformable portion 230'. Thus, connection between the first body 210', the second body 220', and the deformable portion 230' may be strengthened, and the structural stability of the end plate 200' may be improved.

The deformable portion 230' may be arranged between the first body 210' and the second body 220'. The deformable portion 230' may have stiffness that increases from the center toward the edge. That is, the deformable portion 230' may be arranged between the first body 210' and the second body 220', and may be configured to absorb the expansion of the battery cell 110' in a region adjacent to the center and support the first body 210' and the second body 220' in a region adjacent to the edge.

Referring to FIGS. 7 and 8, the deformable portion 230' may include an absorbing member 231' and a support member 232'.

The absorbing member 231' may be connected to the first surface 211' and the second surface 221' of the first body 210' and the second body 220', respectively. In one or more embodiments, the absorbing member 231' may be in surface-contact with the first surface 211' and the second surface 221'. The absorbing member 231' may be compressively deformed in response to being pressurized by the first surface 211' and the second surface 221'.

The absorbing member 231' may have a relatively lower stiffness than the support member 232' described later. That is, when the absorbing member 231' is pressurized by the first body 210' and the second body 220', the absorbing member 231' may have a greater compressive strain than the support member 232'. Thus, the amount of expansion of the battery cell 110 absorbed by the absorbing member 231' may be greater than that of the support member 232'.

Referring to FIGS. 7 and 9, the absorbing member 231' may be arranged adjacent to the center of the first body 210' and/or the second body 220'. In other words, the absorbing member 231' may be arranged at a position where expansion of the battery cell 110' primarily occurs when a swelling phenomenon, etc., occurs. Thus, the expansion of the battery cell 110' may be absorbed by the absorbing member 231', thereby ensuring the stability of the battery module 10.

In an embodiment, the absorbing member 231' may cover an electrode assembly 111' of the battery cell 110'. The electrode assembly 111' accommodated inside the battery cell 110' may be arranged on an inner side of a periphery of the absorbing member 231' when viewed in the longitudinal direction (e.g., the X-axis direction) of the battery module 10'.

In other words, a portion of the battery cell 110', deformed by the electrode assembly 111', may be covered by the absorbing member 231'. As the deformed portion of the battery cell 110' is covered by the absorbing member 231' having a relatively low stiffness, the expansion of the battery cell 110' may be absorbed by the absorbing member 231'. Thus, even in case that the battery cell 110' expands due to swelling, etc., stability of the battery module 10' may be secured.

Referring to FIGS. 7 to 9, an absorbing connecting groove 2311' into which a connecting projection may be inserted may be formed in the absorbing member 231'. The absorbing connecting grooves 2311', which correspond to the shape of the first connecting projection 2101' and the second connecting projection 2201', may be formed in the absorbing member 231' to allow the first connecting projection 2101' and the second connecting projection 2201' to be inserted therein. The first connecting projection 2101' and the second connecting projection 2201' may be connected to the first body 210' and the second body 220' by being hooked to the deformable portion 230'.

Referring to FIGS. 7 to 9, the support member 232' may be connected to an outer side(s) (e.g., and upper edge and outer side edges) of the absorbing member 231'. In one or more embodiments, the support member 232' may be adjacent to the edges of the first surface 211' and the second surface 221'. That is, the support member 232' may contact and support a portion adjacent to the edges of the first surface 211' and the second surface 221'.

The support member 232' may have a higher stiffness than the absorbing member 231'. In the event that the support member 232' is compressively deformed by being pressurized by the first surface 211' and the second surface 221', the amount of deformation of the support member 232' may be less than that of the absorbing member 231'. Thus, deformation of a region adjacent to the edge of the end plate 200' may be prevented.

In an embodiment, the support member 232' may include a first support member 232a' and a second support member 232b'.

Referring to FIGS. 7 to 9, the first support member 232a' may be arranged adjacent to a battery terminal 110a' of the battery cell 110'. In some embodiments, the first support member 232a' may cover a height-wise side (e.g., the upper side) of the battery module 10' along the edge of the first surface 211' or the second surface 221'.

Accordingly, even in the event that the battery cell 110' expands, deformation of a side of the end plate 200' adjacent to the battery terminal 110a' may be minimized (or at least reduced). In other words, even in the event that swelling occurs, a side of the battery cell 110' adjacent to the battery terminal 110a' may be firmly supported by the end plate 200'. Thus, can-cap breakage due to deformation of the battery cell 110' may be prevented (or at least mitigated).

In an embodiment, the connecting groove 2301' may not be formed in the first support member 232a'. The first support member 232a' may have a constant (or substantially constant) shape in the width direction (e.g., the Y-axis direction) of the battery module 10'. Thus, the stiffness of the first support member 232a' may be secured, and deformation of sides of the first body 210' and the second body 220' covered by the first support member 232a' may be minimized (or at least reduced).

Referring to FIGS. 7 and 9, the second support member 232b' may cover a width-wise side of the battery module 10' along the edge of the first surface 211' or the second surface 221'.

Accordingly, even in the event that the battery cell 110' expands, deformation of a width-wise edge side of the battery module 10' may be minimized (or at least reduced). In other words, even in the event that swelling, etc., occurs, deformation of the width-wise edge side of the battery module 10' may be minimized (or at least reduced). In response to the battery cell 110' expanding, deformation of the edge of the end plate 200' may be minimized (or at least reduced), thereby ensuring the structural stability of the battery module 10'.

Referring to FIGS. 7 and 9, the second support member 232b' may be provided as a pair. A pair of second support members 232b' may cover opposite width-wise sides (e.g., opposite sides in the Y-axis direction) of the battery module 10' along the edge of the first surface 211' or the second surface 221'.

Because the second support members 232b' are provided as a pair, the end plate 200' may be deformed symmetrically (or substantially symmetrically) in the width direction of the battery module 10'. Thus, the durability of the end plate 200' may be improved.

In an embodiment, a support connecting groove 2322b' may be formed in the second support member 232b'. That is, the second support member 232b' may be connected to the first body 210' or the second body 220' by being coupled to the connecting projection 221' and 2112'.

Because the second support member 232b' has a relatively higher stiffness than the absorbing member 231', the second support member 232b' may firmly support the connecting projection 221' and 2112' inserted into the inner side of the support connecting groove 2322b'. Thus, an engaging relationship between the first body 210', the second body 220', and the deformable portion 230' may be firmly maintained.

The operating principle and effect of the battery module 10 according to the embodiment of the disclosure will be described.

Referring to FIGS. 1 to 5, an end plate 200 according to an embodiment of the disclosure may support the battery group 100 in the longitudinal direction (e.g., the X-axis direction) of the battery module 10. In some embodiments, the end plates 200 may be provided as a pair to support the battery group 100 in opposite directions (e.g., opposite ends of the battery group 100 in the X-axis direction), thereby improving the stability of the battery module 10.

The end plate 200 (or pair of end plates 200) may be arranged on a side (or sides) of the battery group 100 to support the battery group 100 in the direction in which the battery group 100 is arranged. Accordingly, in the event that the battery cell 110 expands due to swelling, etc., the end plate 200 (or pair of end plates 200) may support the battery cell 110 and absorb the expansion.

Referring to FIGS. 4 to 6, the first body 210 may be arranged between an outmost one of the battery cells 110 and the deformable portion 230. The first body 210 may contact the outermost battery cell 110 through a surface and contact the deformable portion 230 through the first surface 211 opposite to the surface contacting the outermost battery cell 110. Thus, the first body 210 may transmit a force transmitted by the expansion of one of the battery cells 110 to the deformable portion 230.

Referring to FIGS. 4 to 6, the first body 210 may include the first connecting projection 2101. In some embodiments, the first body 210 may include the first connecting projection 2101 protruding on the first surface 211 facing the deformable portion 230.

The first connecting projection 2101 may be engaged with the deformable portion 230. For example, the first connecting projection 2101 may be inserted into the connecting groove 2301 in the deformable portion 230 and may be thereby engaged with the deformable portion 230.

Because the first connecting projection 2101 contacts the deformable portion 230, the contact area between the first body 210 and the deformable portion 230 may be maximized (or at least increased). Thus, a coupling relationship between the first body 210 and the deformable portion 230 may be strengthened.

The first connecting projection 2101 may be arranged closer to the edge than the center of the first surface 211. For example, the first connecting projection 2101 may be arranged in the connection region A that is closer to the edge than the center of the first surface 211.

Because the first connecting projection 2101 is arranged in the connection region A, the thickness of the deformable portion 230 positioned at the center of the first surface 211 or the second surface 221 may be relatively thicker than the thickness of the deformable portion 230 at the edges. Thus, in the event that the battery cell 110 expands, the amount of expansion of the battery cell 110 absorbed by the deformable portion 230 may be maximized (or at least increased).

Referring to FIGS. 4 and 5, the second body 220 may be spaced apart from the first body 210 with the deformable portion 230 therebetween (e.g., the deformable portion 230 may be sandwiched between the first body 210 and the second body 220). The second body 220 may be configured to compressively deform the deformable portion 230 by pressurizing the deformable portion 230 together with the first body 210 in the event that the battery cell 110 expands. In other words, the second body 220 may allow the expansion of the battery cell 110 together with the first body 210 to be absorbed by the deformable portion 230.

Referring to FIGS. 4 and 5, the deformable portion 230 may be arranged between the first body 210 and the second body 220. The deformable portion 230 may have a relatively lower stiffness than either the first body 210 or the second body 220, and thus the deformable portion 230 may be compressively deformed in the event that the battery cell 110 expands. Thus, the deformable portion 230 may absorb the expansion of the battery cell 110 and improve the structural stability of the battery module 10.

The connecting groove 2301 may be formed in a position corresponding to the connecting projection in the deformable portion 230. For example, the connecting groove 2301 may be arranged closer to the edge than the center of the deformable portion 230. That is, because the thickness of a central portion of the deformable portion 230 is maintained (e.g., not reduced by the presence of the connecting groove 2301), the amount of expansion of the battery cell 110 absorbed by the deformable portion 230 may be maximized (or at least increased).

Referring to FIGS. 2 and 3, the side plate 300 may be arranged on a side of the battery group 100. The side plate 300 may support a side of the battery group 100 and connect the pair of end plates 200 to each other.

Referring to FIGS. 7 to 9, the deformable portion 230' according to another embodiment of the disclosure may include the absorbing member 231' and the support member 232'.

The absorbing member 231' may be arranged to contact central portions of the first surface 211' and the second surface 221'. The absorbing member 231' may be in contact with the first surface 211' and the second surface 221' and absorb the expansion of the battery cell 110'. Thus, the stability of the battery module 10' may be achieved.

The support member 232' may be arranged on an outer side (or sides) of the absorbing member 231'. The support member 232' may have a higher stiffness than the absorbing member 231', thereby minimizing (or at least reducing) deformation of a side of the edge of the end plate 200' in the event that the battery cell 110' expands. Thus, the durability of the battery module 10' may be improved.

In an embodiment, the deformable portion 230' may include the first support member 232a' and the second support member 232b'.

The first support member 232a' may be arranged adjacent to the battery terminal 110a'. That is, the first support member 232a' may support a side of the end plate 200' adjacent to the battery terminal 110a' to prevent (or at least mitigate) the side of the end plate 200' from being deformed, even in the event that the battery cell 110' expands. Thus, even in the event that the battery cell 110' expands, the can-cap breakage, etc., may be prevented (or at least mitigated), thereby improving the durability of the battery module 10'.

The second support member 232b' may be arranged on a width-wise side of the battery module 10'. That is, the second support member 232b' may support a side of the edge of the end plate 200' to prevent (or at least mitigate) the side of the edge of the end plate 200' from being deformed, even in the event that the battery cell 110' expands. Thus, the second support member 232b' together with the first support member 232a' may improve the durability of the battery module 10'.

A battery module and a battery pack including the same according to an embodiment of the disclosure may absorb expansion of a battery cell using a stacked structure of an end plate in which a first body, a second body, and a deformable portion are arranged in a direction.

Moreover, the durability of the end plate may be improved by firmly supporting the deformable portion using a connecting projection formed to protrude on at least one of the first body or the second body.

In addition, by specifying a position where the connecting projection is formed on the first body or the second body to maximize (or at least increase) the amount of expansion of the battery cell absorbed by the deformable portion, the structural stability of the battery module may be improved.

A battery module and a battery pack including the same according to an embodiment of the disclosure may absorb expansion of a battery cell using a stacked structure of an end plate in which a first body, a second body, and a deformable portion are arranged in a direction.

Moreover, the durability of the end plate may be improved by firmly supporting the deformable portion using a connecting projection protruding on at least one of the first body or the second body.

In addition, by specifying a position where the connecting projection is formed on the first body or the second body to maximize (or at least increase) the amount of expansion of the battery cell absorbed by the deformable portion, the structural stability of the battery module may be improved.

However, effects that may be obtained through the disclosure are not limited to the above-described effects, and other technical effects not mentioned may be clearly understood by those of ordinary skill in the art from the description of the disclosure described below.

In some embodiments, the plurality of battery cells are arranged in a row along the direction and/or one after another along the direction.

In some embodiments, a width of the or each connecting projection increases toward the deformable portion.

In some embodiments, the first body and/or the second body comprise one or more connecting projections protruding toward the deformable portion and being configured to engage with the deformable portion, e.g., with a connecting groove in the deformable portion.

In some embodiments, an extension of the connecting projection along a height direction (which is perpendicular to the direction) is more than an extension of the connecting projection toward the deformable portion and/or along the direction.

In some embodiments, the deformable portion may include, per connecting projection of the first body, a connecting groove configured to receive the connecting projection of the first body. Alternatively or additionally, the deformable portion may include, per connecting projection of the second body, a connecting groove configured to receive the connecting projection of the second body

In some embodiments, a width of the or each connecting groove decreases toward the first body or the second body.

In some embodiments, the first body and the second body are coupled to each other by the deformable portion.

In some embodiments, the first body is disposed between the deformable portion and the plurality of battery cells. Alternatively or additionally, the deformable portion is disposed between the second body and the plurality of battery cells.

In some embodiments, the term "center" in context to an object (e.g., of the first body and/or the second body) refers to one or more of the following: a geometric center of the object and/or center of mass of the object. In some embodiments, the term "'center line" relates to a line, on which the center is disposed and/or which is a symmetry line.

In some embodiments, an extension of the first body along the direction differs from (e.g., is less than) an extension of second body along the direction.

In some embodiments, an extension of the deformable portion along the direction differs from (e.g., is less than) an extension of second body along the direction.

In some embodiments, the term "engaged" in context to two objects may be configured as form-fit (also referred to as interlocking) engagement.

In some embodiments, the or each connecting projection of the first body may, along a width direction (which is perpendicular to the direction and/or to the height direction) be closer to an edge of the first body than to a center (e.g., geometric center and/or center of mass) of the first body. Alternatively or additionally, the or each connecting projection of the second body may, along a width direction (which is perpendicular to the direction and/or to the height direction) be closer to an edge of the second body than to a center (e.g., geometric center and/or center of mass) of the second body.

In some embodiments, a battery module comprises: a battery group comprising a plurality of battery cells arranged in a direction; and an end plate comprising: a first body and a second body, wherein, preferably, the first body is disposed between the second body and the battery group; and a deformable portion between the first body and the second body, wherein the first body and/or the second body comprise one or more connecting projections protruding toward the deformable portion and being configured to engage with the deformable portion, e.g., a groove thereof.

According to various aspects the deformable portion may include a smaller stiffness than the first body and/or the second body. Alternatively or additionally the deformable portion may include a higher elastic deformation limit than the first body and/or the second body.

According to various aspects the deformable portion may have a higher elastic deformation limit than the first body and/or the second body.

According to various aspects, the term "deformation" in context with an object as used herein relates to a change in geometry of the object. As example, the deformation may be expressed as strain (also referred to as relative deformation). The term "elastic deformation limit" denotes the value of deformation (e.g., strain), at which at which the object begins to deform plastically (e.g., at which 0.2% plastic deformation occurs). As example, the deformable portion may be flexible and/or elastically deformable.

According to various aspects, the term "stiffness" in context to an (e.g., elastic) object (e.g., a body or portion) expresses (e.g., as a measure) the resistance offered by the object to deformation, e.g., to elastic deformation. As example, the stiffness may be expressed as a force, to which the object is exposed, per displacement of the object produced by the force along the same degree of freedom as the force. The displacement expresses the deformation of the object, e.g., in terms of a change of length along the force. The stiffness is related to the object and may be a function of the geometry of the object and/or the stiffness or object.

According to various aspects, the term "compressively deformable" in context to an (e.g., elastic) object (e.g., a body or portion) relates to the object's response to a deformation of object, e.g., expressed by the poisson's ratio. For example, a compressively deformable object may have a poisson's ratio in the range of 0.35 to 1, e.g., above 0.4 and/or below 0.6. Alternatively or additionally a compressively deformable object may have an (e.g., elastic) deformation limit (also referred to as compressibility) above 1%, e.g., above 10%, e.g., above 25%, e.g., above 50%.

According to various aspects, the term "compressively deformable" describes a property of the deformable portion 230, and not necessarily of the end plate 200 as a whole. In particular, the deformable portion 230 is configured to undergo deformation in response to compressive forces applied by expansion of the battery cell 110, thereby allowing relative displacement between the first body 210 and the second body 220 and absorbing at least a part of the expansion of the battery cell 110.

According to various aspects, the term deformable portion 230 refers to a portion of the end plate 200 that is configured to undergo deformation, in particular compressive deformation, in response to a force applied by expansion of a battery cell 110, so as to allow relative displacement between the first body 210 and the second body 220 and thereby absorb at least part of the expansion of the battery cell 110.

According to various aspects, the deformable portion 230 has a lower overall stiffness (e.g., rigidity) than the first body 210 and/or the second body 220, e.g., in at least a compression direction (e.g., one or more compression directions), such that the deformable portion 230 is preferentially deformed when the first body 210 and the second body 220 are pressurized toward each other and/or along the compression direction.

The deformation of the deformable portion 230 may include elastic deformation and, in some embodiments, may further include limited plastic deformation, provided that the deformable portion 230 maintains a function of absorbing expansion of the battery cell 110.

In embodiments in which the deformable portion 230 includes a plurality of sub-members having different stiffness (e.g., differing from each other in stiffness), such as, for example, an absorbing member 231 and a support member 232 (e.g., differing from each other in stiffness). The term deformable portion 230 collectively refers to the entire structure formed by the plurality of sub-members (e.g., absorbing member 231 and a support member 232), in which deformation of at least a part of the structure contributes to absorption of expansion of the battery cell 110.

While the disclosure is described by limited embodiments and drawings, the disclosure is not limited thereby and various modifications and changes may be made by those of ordinary skill in the art within the technical scope of the disclosure and the equivalent range to the claims set forth below.

## Claims

1. A battery module (10, 10') comprising:
a battery group (100') comprising a plurality of battery cells (110, 110') arranged in a direction; and
an end plate (200, 200') comprising:
a first body (210, 210') on a side of the battery group (100') in the direction and arranged to face the battery group (100');
a second body (220, 220') spaced apart from the first body (210, 210'); and
a deformable portion (230, 230') between the first body (210, 210') and the second body (220, 220'), the deformable portion (230, 230') being compressively deformable,
wherein at least one of the first body (210, 210') or the second body (220, 220') comprises a connecting projection (221', 2112') protruding toward the deformable portion (230, 230') and being configured to engage with the deformable portion (230, 230').

2. The battery module (10, 10') of claim 1, wherein the connecting projection (221', 2112') is relatively closer to an edge of the first body (210, 210') or the second body (220, 220') than to a center of the first body (210, 210') or the second body (220, 220').

3. The battery module (10, 10') of one of claims 1 to 2, wherein the connecting projection (221', 2112') is on at least any one of a first surface (211, 211') of the first body (210, 210') facing the second body (220, 220') or a second surface (221, 221') of the second body (220, 220') facing the first body (210, 210').

4. The battery module (10, 10') of one of claims 1 to 3, wherein a stiffness of the deformable portion (230, 230') increases from a center of the deformable portion (230, 230') toward an edge of the deformable portion (230, 230').

5. The battery module (10, 10') of one of claims 1 to **4,** wherein the deformable portion (230, 230') comprises:
an absorbing member (231') in surface-contact with the first body (210, 210') and the second body (220, 220'); and
a support member (232') connected to an outer side of the absorbing member (231'), the support member (232') having a higher stiffness than the absorbing member (231').

6. The battery module (10, 10') of claim 5, wherein an electrode assembly (111') accommodated inside each of the plurality of battery cells (110, 110') is in an inner side of a periphery of the absorbing member (231') when viewed from the direction.

7. The battery module (10, 10') of claim 5 or 6, wherein the support member (232') is adjacent to a battery terminal (110a') of a battery cell (110, 110') of the plurality of battery cells (110, 110').

8. The battery module (10, 10') of one of claims 1 to 7, wherein the connecting projection (221', 2112') has a shape with a width increasing outwardly.

9. The battery module (10, 10') of one of claims 1 to 8, wherein the connecting projection (221', 2112') extends in a height direction of the plurality of battery cells (110, 110').

10. The battery module (10, 10') of one of claims 1 to 9, further comprising a connecting groove (2301, 2301') in the deformable portion (230, 230'), the connecting groove (2301, 2301') having a preset depth and being configured to receive the connecting projection (221', 2112').

11. The battery module (10, 10') one of claims 1 to 10, wherein a stiffness of the deformable portion (230) is less than a stiffness of the first body (210) and/or of the second body (220).

12. The battery module (10, 10') one of claims 1 to 11, wherein a stiffness of the deformable portion (230) is less than a stiffness of the first body (210) and/or of the second body (220).

13. The battery module (10, 10') of one of claims 1 to 12, wherein a stiffness of the deformable portion (230) is less than a stiffness of the first body (210) and/or of the second body (220).

14. The battery module (10, 10') of claim 1, wherein a compressibility of the deformable portion (230) is more than a compressibility of the first body (210) and/or of the second body (220).

15. A battery pack (1) comprising:
a plurality of battery modules (10, 10') of one of claims 1 to 14; and
a pack housing (20) in which the plurality of battery modules (10, 10') are accommodated.
